# EUROPÄISCHE PATENTANMELDUNG

(11) **EP 4 667 186 A1**
(43) Veröffentlichungstag der Anmeldung: **24.12.2025**
(21) Anmeldenummer: 24183843.2
(22) Anmeldetag: 21.06.2024
(51) Int. Cl.: B29C 49/04, B29C 49/20, B29K 23/00, B29L 31/00, B29C 49/22

(54) **VERFAHREN ZUR HERSTELLUNG EINES BLASFORMTEILS UND BLASFORMTEIL**

(71) Anmelder: TI Automotive Technology Center GmbH, 76437 Rastatt (DE)
(72) Erfinder: Kizilay, Irfan, 68799 Reilingen (DE); Lindow, Manuel, 76593 Gernsbach (DE); Leipold, Stefan, 67470 Seltz (FR); Deibel, Florian, 76547 Sinzheim (DE); Schäfer, Thorsten, 76889 Steinfeld (DE)
(74) Vertreter: Reiser & Partner Patentanwälte mbB

(57) **Zusammenfassung**

Verfahren zur Herstellung eines Blasformteils (1), bei welchem eine Stützstruktur (2) bereitgestellt und in einer Blasform (3) angeordnet wird, ein Vorformling (4) derart in die Blasform (3) eingeführt wird, dass die Stützstruktur (2) von dem Vorformling (4) zumindest teilweise umschlossen ist, anschließend die Blasform (3) geschlossen und durch Blasformen aus dem Vorformling (4) ein die Stützstruktur (2) umgebender Grundkörper (5) erzeugt wird, wobei sich der Grundkörper (5) während des Blasformens stoffschlüssig und/oder formschlüssig mit der Stützstruktur (2) verbindet. Die Erfindung betrifft weiterhin ein Blasformteil (1), umfassend einen Grundkörper (5), der einen Hohlraum (15) einschließt, und eine innerhalb des Grundkörpers (5) angeordnete Stützstruktur (2), wobei der Grundkörper (5) und die Stützstruktur (2) den Hohlraum (15) begrenzen, wobei der Grundkörper (5) und die Stützstruktur (2) stoffschlüssig miteinander verbunden sind.

## Beschreibung

Die Erfindung betrifft ein Verfahren zur Herstellung eines mit einer Stützstruktur versehenen Blasformteils. Die Erfindung betrifft darüber hinaus ein Blasformteil hergestellt mit einem solchen Verfahren.

Beim Blasformverfahren wird ein schlauchförmiger oder flächiger Vorformling in eine Blasform eingebracht, wobei sich die Blasform außenseitig an den Vorformling anlegt und die Außenkontur des Blasformteils vorgibt. Die Blasform umfasst zumeist zwei Blasformwerkzeuge mit einer Kavität, die relativ zueinander verfahrbar sind, wobei der Vorformling beim Schließen der Blasformwerkzeuge an den Randbereichen der Kavität der Blasformwerkzeuge abgepresst wird. In diesem Bereich entsteht an dem herzustellenden Blasformteil eine Naht, wobei sich im Bereich der Kavität das Blasformteil ausbildet und außerhalb der Kavität überstehendes Material, der Butzen, verbleibt. Der Butzen wird nach Abschluss des Blasformverfahrens von dem Blasformteil entfernt.

Blasformteile haben einen weiten Anwendungsbereich. So kommen Blasformteile beispielsweise in der Elektromobilität zum Einsatz, insbesondere in Form von Rohranordnungen, um Temperiermedien zu verschiedenen Komponenten eines Elektrofahrzeugs leiten zu können, beispielsweise den Akkumulatoren oder einem Wärmetauscher zum Temperieren der Fahrgastzelle. Akkumulatoren weisen eine optimale Leistungsfähigkeit nur innerhalb eines begrenzten Temperaturspektrums auf, sodass es je nach Umgebungstemperatur erforderlich sein kann, die Akkumulatoren zu erwärmen oder zu kühlen. Ebenso ist es erforderlich, eine Fahrgastzelle in Abhängigkeit der Umgebungstemperatur entweder zu kühlen oder zu erwärmen. Durch die Rohranordnung können Temperiermedien mit unterschiedlichen Temperaturen verteilt und verschiedenen Komponenten zugeleitet werden. Weitere Einsatzbereiche sind in stationären Anwendungen gegeben, beispielsweise in Energiespeicheranlagen oder in Temperieranwendungen für Heiz- und Kühlkreise in der Gebäudetechnik.

Blasformteile können zudem in Form von Behältern eingesetzt werden, insbesondere als Ausgleichsbehälter für Temperiermedien. Durch Temperaturänderungen kann sich das Volumen des Temperiermediums ändern. Eine Erhöhung der Temperatur des Temperiermediums führt zu einer Ausdehnung des Temperiermediums. Dadurch steigt der Druck im Ausgleichsbehälter an, wobei ab einem bestimmten Druck Luft über ein Ventil aus dem Ausgleichsbehälter entweicht. Bei anschließender Normalisierung der Temperatur des Temperiermediums zieht sich das Temperiermedium wieder zusammen, sodass ein Unterdruck entsteht. Folglich strömt Luft über das Ventil in den Ausgleichsbehälter ein, bis ein Druckausgleich erreicht ist. Insofern steht der Ausgleichsbehälter im Betrieb je nach Situation zumeist unter Über- oder Unterdruck.

Derartige Über- und Unterdrücke stellen besondere Anforderungen an die strukturelle Festigkeit des Ausgleichsbehälters, insbesondere an die strukturelle Festigkeit und Maßhaltigkeit von medienführenden Schnittstellen des Ausgleichsbehälters an weitere Komponenten sowie an mechanische Befestigungspunkte des Ausgleichsbehälters. Derartige Anforderungen können bislang von blasgeformten Ausgleichsbehältern nicht gewährleistet werden. Daher kann es erforderlich sein, ein separates Strukturbauteil als Schnittstelle in den Ausgleichsbehälter einzubringen. Ebenso kann es erforderlich sein, zusätzliche Schnittstellenelemente wie Schraubkappen für Befüllöffnungen, Über- oder Unterdruckventile, Sensoren für Temperatur oder Füllstand oder Ableitanschlüsse für elektrostatische Ausgleichpotentiale zu integrieren. Dabei führen bauraumgreifende Strukturbauteile zu Einschränkungen bei der Gestaltung des Blasformteils.

Aus der EP 3 259 110 B1 ist ein Verfahren zum Extrusionsblasformen eines Behälters aus thermoplastischem Kunststoff bekannt, bei dem ein Einlegeteil mit einer Durchführung derart angeordnet wird, dass nach dem Extrusionsblasformen das Einlegeteil an der Behälteraußenseite angeordnet ist.

Der Erfindung liegt die Aufgabe zugrunde, ein einfaches Verfahren zur Herstellung eines Blasformteils bereitzustellen, bei dem Blasformteile kostengünstig hergestellt werden können. Der Erfindung liegt zudem die Aufgabe zugrunde, ein Blasformteil bereitzustellen, welches kostengünstig herstellbar ist.

Diese Aufgabe wird mit den Merkmalen von Anspruch 1 gelöst. Auf vorteilhafte Ausgestaltungen nehmen die Unteransprüche Bezug.

Bei dem erfindungsgemäßen Verfahren zur Herstellung eines Blasformteils wird eine Stützstruktur bereitgestellt und in einer Blasform angeordnet, ein Vorformling derart in die Blasform eingeführt, dass die Stützstruktur zumindest teilweise von dem Vorformling umschlossen ist, anschließend die Blasform geschlossen und durch Blasformen aus dem Vorformling ein die Stützstruktur umgebender Grundkörper erzeugt, wobei sich der Grundkörper während des Blasformens stoffschlüssig und/oder formschlüssig mit der Stützstruktur verbindet.

Der Vorformling ist vorzugsweise schlauchförmig ausgebildet. Bei der Einführung des Vorformlings in die Blasform wird der Vorformling bevorzugt über die Stützstruktur übergestülpt, sodass die Stützstruktur innerhalb des Vorformlings angeordnet und von dem schlauchförmigen Vorformling umgeben ist. Während des Blasformens legt sich der Vorformling von außen an die Stützstruktur an. Alternativ kann der Vorformling flächig ausgebildet sein.

Durch das Blasformen wird ein Hohlraum ausgebildet, der von dem Grundkörper und der Stützstruktur begrenzt ist. Der Hohlraum kann insbesondere dazu ausgebildet sein, ein Fluid aufzunehmen und/oder durchzuleiten. Das Fluid kann dabei ein Gas oder eine Flüssigkeit sein, beispielsweise ein Temperiermedium.

Eine einfache und kostengünstige Herstellbarkeit einer stoffschlüssigen Verbindung zwischen Stützstruktur und Grundkörper ist insbesondere dann gegeben, wenn der Grundkörper und die Stützstruktur aus Kunststoff ausgebildet sind, wobei der Kunststoff des Grundkörpers und der Kunststoff der Stützstruktur vorzugsweise eine ähnliche Schmelztemperatur aufweisen. Dadurch lässt sich eine stoffschlüssige Verbindung besonders energieeffizient und kostengünstig erreichen, denn ein Wiederaufheizen kann vermieden werden. Bevorzugt sind der Grundkörper und die Stützstruktur aus dem gleichen Kunststoff ausgebildet. Als Kunststoff für den Grundkörper und die Stützstruktur kommt insbesondere ein Polymermaterial in Betracht, besonders bevorzugt Polyolefine wie Polypropylen und/oder Polyamid.

Es ist auch denkbar, den Grundkörper und/oder die Stützstruktur mehrlagig auszugestalten, wobei für die Lagen jeweils unterschiedliche Kunststoffe zum Einsatz gelangen. Dadurch kann der Grundkörper mit weiteren Zusatzfunktionalitäten ausgerüstet sein, beispielsweise ist es denkbar, Schäume zu integrieren und dadurch eine verbesserte thermische Isolation zu erzielen. Ebenso ist denkbar, durch geeignete Werkstoffwahl verbesserte chemische Eigenschaften, beispielsweise eine verbesserte Stabilität, insbesondere eine verbesserte Verträglichkeit gegenüber Ölmedien, zu erzielen.

Die Stützstruktur kann Elemente umfassen, die der Anbindung des Blasformteils an andere Bauelemente dienen. Dabei können die Elemente insbesondere eine Schnittstellengeometrie aufweisen oder ausbilden. Schnittstellengeometrien für die Anbindung sind beispielsweise Schraubgewinde. Diese können durch eine Schutzabdeckung abgedeckt sein, wobei die Schutzabdeckung dem Schutz der Schnittstellengeometrie während der Herstellung des Blasformteils dient. Im Anschluss an die Herstellung, insbesondere im Anschluss an den Blasformvorgang, kann die Schutzabdeckung entfernt werden. Dabei ist insbesondere vorteilhaft, dass besonders maßhaltige Schnittstellengeometrien bereitgestellt werden können, wobei die Maßhaltigkeit durch die Schutzabdeckung auch über den Blasformvorgang hinaus gewährleistet werden kann. Dadurch kann die Schnittstellengeometrie für eine Anbindung mit Überdruck- und/oder Unterdruckfunktion eingesetzt werden.

Grundsätzlich ist denkbar, eine Ausbildung der Stützstruktur oder der Schnittstellengeometrien als ein Materialverbund unterschiedlicher Materialklassen, beispielsweise einer Kombination aus Kunststoff und Metall oder Kunststoff und Keramik zu realisieren, besonders bevorzugt in einer stoffschlüssigen Verbindung.

Durch die stoffschlüssige Verbindung sind der Grundkörper und die Stützstruktur fest miteinander verbunden. Dabei ist es insbesondere vorteilhaft, die stoffschlüssige Verbindung im Zuge der Formgebung des Grundkörpers direkt durch das Blasformverfahren herzustellen. Sofern die Stützstruktur hervorstehende Element mit Anschlusselementen, Stutzen und dergleichen aufweist, kann die Verbindung von Grundkörper und Stützstruktur zumindest in dem Bereich des hervorstehenden Elementes insbesondere mediendicht ausgeführt sein. Die mediendichte Verbindung kann dabei durch eine stoffschlüssige Verbindung im Zuge des Blasformverfahrens erzeugt werden. Dabei ist es nicht erforderlich, zwischen Grundkörper und Stützstruktur zusätzliche Dichtungselemente, beispielsweise Flachdichtungen oder O-Ringe, anzuordnen, wodurch die Anzahl der Einzelkomponenten reduziert werden kann. Zudem können zusätzliche Fertigungsschritte zur Herstellung einer mediendichten Verbindung von Grundkörper und Stützstruktur entfallen.

Die Stützstruktur kann außenseitig Schweißrippen aufweisen. Die Schweißrippen sind dabei insbesondere ausgestaltet, sich während des Blasformens stoffschlüssig mit dem Grundkörper zu verbinden. Die Schweißrippen können dabei außenseitig an der Stützstruktur angeordnet sein. Während des Blasformens schmelzen die Schweißrippen durch Kontakt mit dem Vorformling an und verbinden sich stoffschlüssig mit dem Grundkörper.

Mittels der Schweißrippen kann ferner eine gezielte mechanische Verstärkung des Blasformteils erreicht werden. In den Bereichen, in denen Schweißrippen angeordnet sind, kann das Blasformteil strukturell verstärkt sein, sodass zumindest in diesen Bereichen höhere Kräfte aufgenommen und abgeleitet werden können. Höhere Kräfte können dabei sowohl bei Überdruck als auch bei Unterdruck innerhalb des Blasformteils entstehen. Zudem können die Schweißrippen die Verbindung zwischen Strukturbauteil und Grundkörper verbessern. Durch eine linienförmige Ausgestaltung der Schweißrippen können die Schweißrippen während des Blasformens gezielt an den Vorformling angeschmolzen werden. Dies ist vorteilhaft im Vergleich zu einer flächigen Verbindung zwischen Stützstruktur und Vorformling. Dadurch reduzieren sich die Toleranzanforderungen an die Bauteile, was insbesondere im Hinblick auf die oftmals als Spritzgussbauteil ausgestaltete Stützstruktur vorteilhaft ist, welche höhere Fertigungstoleranzen und damit Maßabweichungen aufweisen, was eine optimale flächige Verbindung zwischen Stützstruktur und Vorformling erschweren kann. Die Schweißrippen können hingegen gezielt mit wenig Aufwand geringere Fertigungstoleranzen aufweisen, sodass eine verbesserte Anbindung zwischen Schweißrippe und Vorformling erreicht wird. Durch den linienförmigen Kontakt können darüber hinaus auch größere Maßabweichungen toleriert werden. Ferner kann durch Einbringen von mechanischen Hinterschnittstrukturen in die Stützstruktur oder in die Schnittstellengeometrie eine zusätzliche Erhöhung der mechanischen Belastbarkeit der Anbindung bewirkt werden.

Die Stützstruktur kann zumindest einen Anschlussstutzen umfassen, der von der Stützstruktur abragt, wobei zumindest eine Schweißrippe außenseitig an dem Anschlussstutzen angeordnet ist, wobei sich die Schweißrippe des Anschlussstutzens während des Blasformens stoffschlüssig mit dem Grundkörper verbindet.

Der Anschlussstutzen kann einen Kanal begrenzen und strömungsleitend mit dem Hohlraum des Grundkörpers verbunden sein. Insbesondere können Fluide durch den Anschlussstutzen in das Blasformteil ein- und ausgeleitet werden. Besonders bevorzugt ist das Blasformteil ausschließlich über den Anschlussstutzen strömungsleitend verbindbar. Durch die Schweißrippe des Anschlussstutzens wird eine dichtende Verbindung zwischen Grundkörper und Anschlussstutzen erreicht. Die Stützstruktur kann je nach Anwendungsfall auch mehrere Anschlussstutzen umfassen, wobei jeder Anschlussstutzen vorzugsweise eine Schweißrippe umfasst. Besonders vorteilhaft ist dabei die Möglichkeit der Herstellung besonders maßhaltiger Schnittstellengeometrien, insbesondere für die Bereitstellung druck- und vakuumfester Schraubverbindungen im Blasformverfahren.

Der Anschlussstutzen kann eine Öffnung umfassen, wobei der Grundkörper durch das Blasformen einen Abdeckbereich ausbildet, der die Öffnung bedeckt, und wobei die Öffnung zugänglich gemacht wird, indem der der Öffnung zugeordnete Abdeckbereich entfernt wird. Der Abdeckbereich bildet eine Schutzabdeckung. Je nach Durchführung des Blasformverfahrens kann nach Abschluss der Formgebung des Grundkörpers aus dem Vorformling und der Herstellung der stoffschlüssigen Verbindung zwischen Grundkörper und Stützstruktur die Öffnung des Anschlussstutzens durch den Abdeckbereich des Grundkörpers bedeckt sein. Daher kann es erforderlich sein, in einem nachfolgenden Fertigungsschritt das Material des Grundkörpers in dem Abdeckbereich zu entfernen. Hierzu kann zur Herstellung der Öffnung in den Grundkörper eine Bohrung eingebracht werden oder die Wandung des Grundkörpers wird im Bereich der Öffnung ausgeschnitten. Denkbar ist auch, bereits beim Blasformen eine Materialschwächung in den Grundkörper einzubringen, welche eine Sollbruchstelle bildet. Nach Abschluss des Blasformverfahrens kann die Öffnung durch Abreißen des Materials im Bereich der Materialschwächung zugänglich gemacht werden. Des Weiteren kann die Öffnung durch Stanzen oder Heißabtrennung hergestellt werden.

Die Blasform kann zumindest zwei Blasformwerkzeuge aufweisen, wobei die Stützstruktur und der Vorformling vor dem Blasformen zwischen den beiden Blasformwerkzeugen angeordnet werden, wobei die Blasformwerkzeuge den Vorformling beim Schließen der Blasform an die Stützstruktur andrücken. Dabei können die Blasformwerkzeuge den Vorformling derart abpressen, dass während des Blasformens in dem Grundkörper ein Trennbereich entsteht. Bevorzugt umgibt der Trennbereich den Abdeckbereich, wobei der Abdeckbereich des Grundkörpers nach dem Blasformen die Öffnung des Anschlussstutzens bedeckt. Der Trennbereich ist eine gezielte strukturelle Schwächung des Grundkörpers, sodass nach dem Blasformvorgang der Grundkörper in dem Trennbereich getrennt, der Abdeckbereich entfernt und so die Öffnung des Anschlussstutzens freigelegt werden kann. Eine Trennung in dem Trennbereich kann dabei vorzugsweise werkzeuglos mit wenig Kraftaufwand erfolgen, beispielsweise durch Abreißen, wodurch sich die Herstellung des Blasformteils vereinfacht.

Die Blasformwerkzeuge können mit Abpresskanten ausgerüstet sein, welche während des Blasformens linienförmig und mit Vorspannung an dem Grundkörper anliegen. Dadurch wird ein besonders einfaches Entfernen des Abdeckbereichs nach dem Blasformen ermöglicht. Der durch die Abpresskanten erzeugte Trennbereich kann als umlaufende Nut ausgebildet sein. Die Abpresskanten können in Form von Rippen ausgebildet sein. Je nach Ausgestaltung können die Abpresskanten auch Schneidkanten bilden, welche eine besonders einfache Trennung des Trennbereichs bewirken. Die Schneidkanten können dabei so ausgebildet sein, dass der Trennbereich schon beim Schließen der Blasform durchtrennt wird.

Der Anschlussstutzen kann ein Verbindungselement zum Anschluss an eine Anschlusskomponente umfassen, wobei vor dem Blasformen ein Schutzelement derart in der Blasform angeordnet wird, dass das Schutzelement nach dem Blasformen zwischen dem Verbindungselement und dem Grundkörper angeordnet ist. Das Schutzelement schützt dabei das Verbindungselement, sodass sich der Vorformling nicht an das Verbindungselement anlegt und eine ungewollte Verbindung zwischen Verbindungselement und Grundkörper verhindert wird. Nach dem Blasformvorgang kann der Grundkörper in dem Trennbereich durchtrennt werden, sodass der Abdeckbereich entfernt werden kann. Dadurch kann das Schutzelement freigelegt und anschließend entfernt werden. Bevorzugt ist das Schutzelement aus einem Material ausgebildet, das eine höhere Glasübergangstemperatur als das Material von Stützstruktur und Vorformling aufweist. Dadurch kann verhindert werden, dass sich das Schutzelement während des Blasformens mit der Stützstruktur und/oder dem Vorformling verbindet. Besonders bevorzugt ist das Schutzelement aus einem Kunststoff ausgebildet. Das Schutzelement kann aus einem Thermoplast ausgebildet sein, beispielsweise aus Polyoxymethylene.

Die Stützstruktur kann als Rippenstruktur ausgebildet sein. Dadurch kann die Stützstruktur gewichts- und materialsparend bei gleichbleibender struktureller Stabilität ausgestaltet werden. Bevorzugt ist die Rippenstruktur sowohl gegen Überals auch gegen Unterdruck ausgelegt. In den Bereichen zwischen den Rippen kann die Struktur des Blasformteils gezielt strukturell schwächer ausgestaltet werden. Eine derartige strukturelle Schwächung kann beispielsweise dazu dienen, definierte Bereiche für Blähungen bei Überdruck innerhalb des Blasformteils zu erzielen.

Die Stützstruktur kann eine Sensorhalterung umfassen. An der Sensorhaltung kann vor dem Blasformen ein Sensor angeordnet werden, der nach dem Blasformvorgang in dem Blasformteil angeordnet und fixiert ist. Dabei kann vorteilhaft sein, dass die durch die Stützstruktur gebildete Sensorhalterung nach dem Blasformen in dem Blasformteil verbleibt, sodass kein zusätzlicher Arbeitsschritt zur Entfernung der Sensorhalterung notwendig ist. Dadurch kann das Blasformteil besonders kostengünstig hergestellt werden. Es können verschiedenartige Sensoren an der Sensorhalterung angebracht werden, insbesondere ein Füllstandssensor, ein Temperatursensor oder ein Drucksensor.

Die der Erfindung zugrundeliegende Aufgabe wird auch durch ein Blasformteil gelöst, welches durch das beschriebene Verfahren hergestellt ist. Das erfindungsgemäße Blasformteil umfasst einen Grundkörper, der einen Hohlraum einschließt, und eine innerhalb des Grundkörpers angeordnete Stützstruktur, wobei der Grundkörper und die Stützstruktur den Hohlraum begrenzen, wobei der Grundkörper und die Stützstruktur stoffschlüssig miteinander verbunden sind. Ein erfindungsgemäßes Blasformteil ist nach dem zuvor beschriebenen Verfahren erhältlich. Das Blasformteil kann insbesondere als Behälter oder als Rohranordnung ausgebildet sein. Ist das Blasformteil als Behälter ausgebildet, so ist der Behälter geschlossen und dient der Aufnahme eines Fluids. Ist das Blasformteil als Rohranordnung ausgebildet, dann weist die Rohranordnung zwei Rohröffnungen auf und dient dazu, Fluide leiten zu können.

Die Stützstruktur kann zumindest einen Anschlussstutzen umfassen, der von der Stützstruktur abragt und strömungsleitend mit dem Hohlraum verbunden ist. Der Anschlussstutzen kann derart zum Anschluss des Blasformteils an eine Anschlusskomponente ausgebildet sein, dass das Blasformteil strömungsleitend mit der Anschlusskomponente verbindbar ist. Vorzugsweise ist der Anschlussstutzen röhrenförmig ausgebildet.

Der Anschlussstutzen kann ein Verbindungselement zum Anschluss an eine Anschlusskomponente umfassen. Vorzugsweise kann der Anschlussstutzen mittels des Verbindungselements form- oder kraftschlüssig mit der Anschlusskomponente verbindbar sein. Dazu kann das Verbindungselement bevorzugt als Gewinde, Bajonett-Verschluss, Einpressverdickung, Verklipsung oder Dichtring-Profil ausgebildet sein. Dadurch kann eine einfache Montierbarkeit erreicht werden.

Einige Ausgestaltungen des erfindungsgemäßen Blasformteils und des erfindungsgemäßen Verfahrens werden nachfolgend anhand der Figuren näher erläutert. Diese zeigen, jeweils schematisch:
- Fig. 1: eine Schnittansicht eines erfindungsgemäßen Blasformteils;
- Fig. 2: eine weitere Schnittansicht des Blasformteils;
- Fig. 3: eine Detailansicht eines Anschlussstutzen des Blasformteils aus Fig. 1 im Schnitt nach dem erfindungsgemäßen Herstellverfahren;
- Fig. 4: die Stützstruktur innerhalb des Vorformlings während der Herstellung des Blasformteils nach Fig. 1.

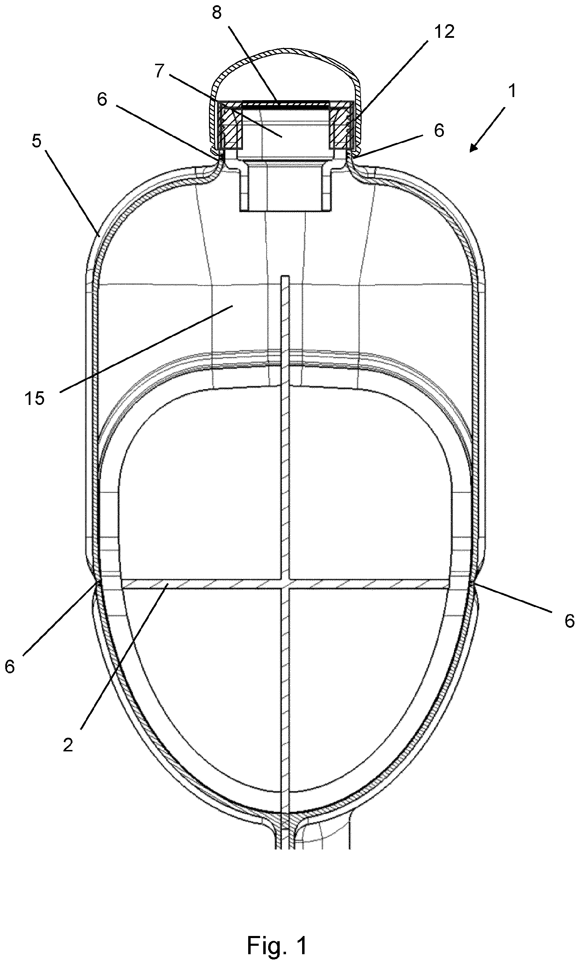

**Fig. 1** zeigt ein als Behälter ausgestaltetes Blasformteil 1. Das Blasformteil 1 umfasst einen Grundkörper 5 und eine innerhalb des Grundkörpers 5 angeordnete Stützstruktur 2. Der Grundkörper 5 und die Stützstruktur 2 umgeben einen Hohlraum 15. Der Hohlraum 15 ist insbesondere dazu ausgebildet, ein (nicht dargestelltes) Fluid aufzunehmen. Das Fluid kann dabei ein Gas oder eine Flüssigkeit sein, beispielsweise ein Temperiermedium. Der Grundkörper 5 und die Stützstruktur 2 sind stoffschlüssig verbunden. Neben der stoffschlüssigen Anbindung ist darüber hinaus alternativ und/oder zusätzlich auch eine formschlüssige Anbindung, beispielsweise hergestellt durch mechanisches Umformen, denkbar.

Die Stützstruktur 2 umfasst einen Anschlussstutzen 7, der von der Stützstruktur 2 abragt und strömungsleitend mit dem Hohlraum 15 verbunden ist. Insbesondere können Fluide durch den Anschlussstutzen 7 in das Blasformteil 1 hinein- und aus dem Blasformteil 1 herausgeleitet werden. Der Anschlussstutzen 7 ist zum Anschluss des Blasformteils 1 an eine (nicht dargestellte) Anschlusskomponente ausgebildet, sodass das Blasformteil 1 strömungsleitend mit der Anschlusskomponente verbindbar ist. Der Anschlussstutzen 7 ist rohrförmig ausgebildet. Der Anschlussstutzen 7 kann dabei als Befüll- oder Entleeröffnung fungieren. Der Anschlussstutzen 7 kann auch eine Verschlusskappe mit integriertem Sensor, insbesondere einen Drucksensor für eine Drucküberwachung, aufnehmen.

Der Anschlussstutzen 7 umfasst ein Verbindungselement 12 zum Anschluss an die (nicht dargestellte) Anschlusskomponente. Der Anschlussstutzen 7 kann mittels des Verbindungselements 12 formschlüssig mit der Anschlusskomponente verbunden sein. Das Verbindungselement 12 ist vorliegend als Gewinde ausgebildet. Alternativ ist auch die Ausgestaltung als Bajonett-Verschluss möglich. Das Verbindungselement 12 kann auch als Einpressverdickung, Verklipsung oder Dichtring-Profil ausgebildet sein.

Der Grundkörper 5 und die Stützstruktur 2 sind aus Kunststoff ausgebildet, wobei der Kunststoff des Grundkörpers 5 und der Kunststoff der Stützstruktur 2 die gleiche Schmelztemperatur aufweisen. Dadurch lässt sich eine stoffschlüssige Verbindung besonders energieeffizient und damit kostengünstig erreichen. Grundkörper 5 und Stützstruktur 2 sind aus einem Polyolefin, beispielsweise aus Polypropylen, ausgebildet. Alternativ können auch andere Thermoplaste oder Materialverbünde zum Einsatz gelangen. Durch die stoffschlüssige Verbindung sind der Grundkörper 5 und die Stützstruktur 2 fest und mediendicht miteinander verbunden.

Die Stützstruktur 2 weist außenseitig Schweißrippen 6 auf, die sich während des Blasformens stoffschlüssig mit dem Grundkörper 5 verbinden. Die Schweißrippen 6 sind außenseitig an der Stützstruktur 2 und an dem Verbindungselement 12 angeordnet. Während des Blasformens schmelzen die Schweißrippen 6 an den Vorformling 4 an. Mittels der Schweißrippen 6 kann eine gezielte mechanische Verstärkung des Blasformteils 1 erreicht werden.

Eine der Schweißrippen 6 ist außenseitig an dem Anschlussstutzen 7 angeordnet, sodass sich während des Blasformens der Grundkörper 5 mit dem Anschlussstutzen 7 stoffschlüssig verbindet. Durch die Schweißrippe 6 an dem Anschlussstutzen 7 wird eine dichtende Verbindung zwischen Grundkörper 5 und Anschlussstutzen 7 erreicht.

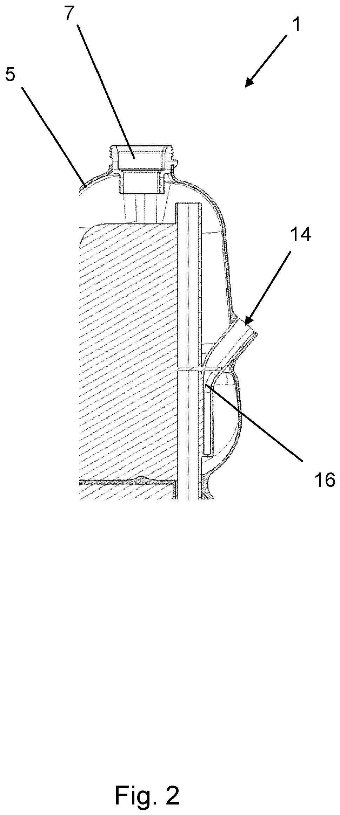

In **Fig. 2** ist zu erkennen, dass die Stützstruktur 2 des in **Fig. 1** gezeigten Blasformteils 1 eine Sensorhalterung 14 umfasst. An der Sensorhalterung 14 ist ein Sensor 16 angeordnet, der in dem Blasformteil 1 angeordnet und fixiert ist. Der Sensor 16 ist bei diesem Ausführungsbeispiel als Füllstandssensor ausgebildet. Auch andere Sensoren können an der Sensorhalterung angeordnet werden, insbesondere ein Temperatursensor oder ein Drucksensor.

Das in **Fig. 1** und **Fig. 2** gezeigte Blasformteil 1 kann auch als (nicht dargestellte) Rohranordnung ausgebildet sein. Ist das Blasformteil 1 als Rohranordnung ausgebildet, dann weist die Rohranordnung zwei Rohröffnungen auf und dient dazu, Fluide leiten zu können.

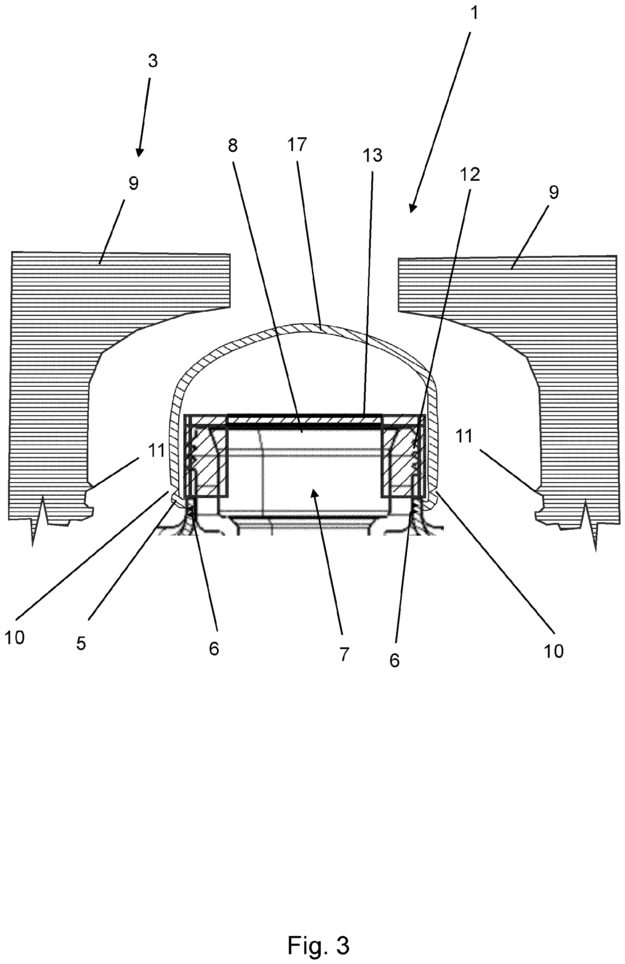

**Fig. 3** zeigt im Detail einen Bereich des Anschlussstutzens 7 des Blasformteils 1 aus **Fig. 1** unmittelbar nach dem Blasformverfahren. Der Anschlussstutzen 7 ist zwischen zwei Blasformwerkzeugen 9 einer Blasform 3 angeordnet. Der Anschlussstutzen 7 und die Blasform 3 sind nur teilweise und daher mit Bruchkante dargestellt.

Der Anschlussstutzen 7 umfasst eine Öffnung 8. Nach Abschluss der Formgebung des Grundkörpers 5 aus einem Vorformling 4 und der Herstellung der stoffschlüssigen Verbindung zwischen Grundkörper 5 und Stützstruktur 2 ist die Öffnung 8 des Anschlussstutzens 7 durch einen Abdeckbereich 17des Grundkörpers 5 bedeckt. Daher ist es erforderlich, in einem nachfolgenden Fertigungsschritt das Material des Grundkörpers 5 in dem Abdeckbereich 17 zu entfernen.

Die Blasform 3 umfasst zwei Blasformwerkzeuge 9, wobei die Stützstruktur 2 und der Vorformling 4 vor dem Blasformen zwischen den beiden Blasformwerkzeugen 9 angeordnet werden. Beim Schließen legen sich die beiden Blasformwerkzeuge 9 der Blasform 1 an die Stützstruktur 2 an und pressen den Vorformling 4 derart ab, dass während des Blasformens ein Trennbereich 10 in dem Grundkörper 5 entsteht. Der Trennbereich 10 umgibt den Abdeckbereich 17, wobei der Abdeckbereich 17 nach dem Blasformen die Öffnung 8 des Anschlussstutzens 7 bedeckt. Der Trennbereich 10 ist eine gezielte strukturelle Schwächung des Grundkörpers 5, sodass nach dem Blasformvorgang der Grundkörper 5 in dem Trennbereich 10 getrennt, der Abdeckbereich 17 entfernt und so die Öffnung 8 des Anschlussstutzens 7 freigelegt werden kann. Eine Trennung in dem Trennbereich 10 kann werkzeuglos mit wenig Kraftaufwand erfolgen, beispielsweise durch Abreißen, wodurch die Herstellung des Blasformteils 1 weiter vereinfacht wird. Es kann aber auch ein Werkzeug zur Abtrennung des Abdeckbereichs 17 eingesetzt werden, was eine gratlose Trennung oder eine Trennung mit sehr geringen Toleranzen ermöglicht.

Die beiden Blasformwerkzeuge 9 sind mit Abpresskanten 11 ausgerüstet, welche sich während des Blasformens linienförmig und mit Kraft an dem Grundkörper 5 anlegen. Dadurch wird ein besonders einfaches Entfernen des Abdeckbereichs 17 nach dem Blasformen ermöglicht. Der durch die Abpresskanten 11 erzeugte Trennbereich 10 ist als umlaufende Nut ausgebildet. Die Abpresskanten 11 können auch als Schneidkanten ausgebildet sein, welche eine besonders einfache Trennung des Trennbereichs 10 bewirken, sodass der Trennbereich 10 schon beim Schließen der Blasform 3 durchtrennt wird.

Der Anschlussstutzen 7 umfasst ein Verbindungselement 12 zum Anschluss an eine Anschlusskomponente, wobei vor dem Blasformen in die Blasform 3 ein Schutzelement 13 derart angeordnet wird, dass das Schutzelement 13 nach dem Blasformen zwischen dem Verbindungselement 12 und dem Grundkörper 5 angeordnet ist. Das Schutzelement 13 schützt dabei das Verbindungselement 12, sodass der Vorformling 4 sich nicht an das Verbindungselement 12 anlegt und eine Verbindung zwischen dem Verbindungselement 12 und dem Grundkörper 5 verhindert wird. Nach dem Blasformvorgang wird der Grundkörper 5 in dem Trennbereich 10 durchtrennt, sodass der Abdeckbereich 17 entfernt werden kann. Dadurch kann das Schutzelement 13 freigelegt und anschließend entfernt werden. Das Schutzelement 13 ist aus einem Material ausgebildet, das eine höhere Schmelztemperatur als das Material der Stützstruktur 2 und des Vorformlings 4 aufweist. Dadurch kann verhindert werden, dass sich das Schutzelement 13 während des Blasformens mit der Stützstruktur 2 und/oder dem Vorformling 4 verbindet. Das Schutzelement 13 ist aus Polyoxymethylene ausgebildet.

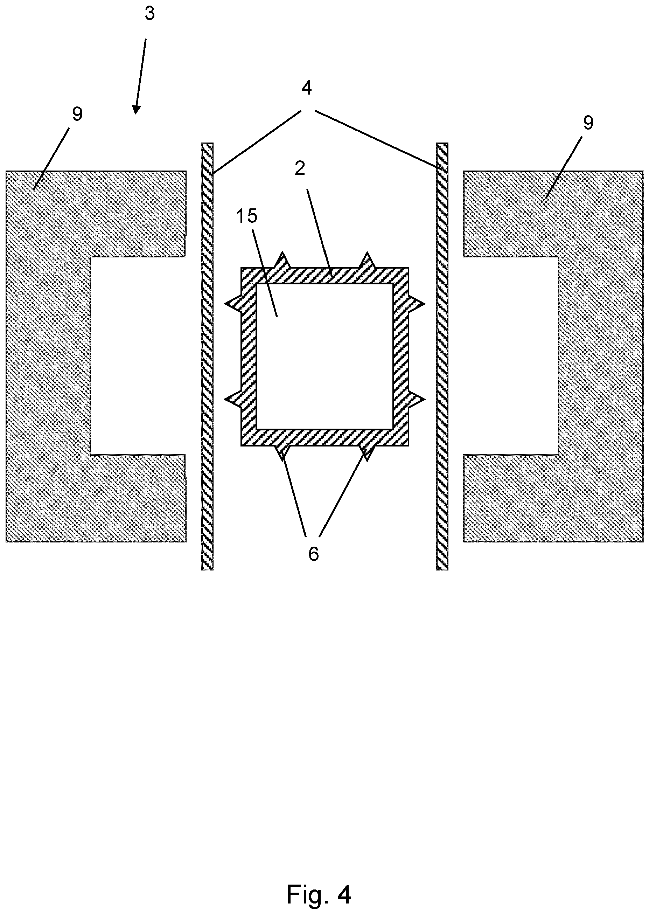

**Fig. 4** zeigt schematisch die Stützstruktur 2 und den Vorformling 4 des Blasformteils 1 aus **Fig. 1** während des Blasformens. Der Vorformling 4 ist schlauchförmig ausgebildet. Bei der Einführung des Vorformlings 4 in die Blasform 3 wird der Vorformling 4 über die Stützstruktur 2 übergestülpt, sodass die Stützstruktur 2 innerhalb des Vorformlings 4 angeordnet ist. Während des Blasformens legt sich der Vorformling 4 von außen an die Stützstruktur 2 an. Die Blasform 3 umfasst zwei Blasformwerkzeuge 9 mit einer Kavität, die relativ zueinander verfahrbar sind, wobei der Vorformling 4 beim Schließen der Blasformwerkzeuge 9 an den Randbereichen der Kavität der Blasformwerkzeuge 9 abgepresst wird.

## Patentansprüche

1. Verfahren zur Herstellung eines Blasformteils (1), bei welchem eine Stützstruktur (2) bereitgestellt und in einer Blasform (3) angeordnet wird, ein Vorformling (4) derart in die Blasform (3) eingeführt wird, dass die Stützstruktur (2) von dem Vorformling (4) zumindest teilweise umschlossen ist, anschließend die Blasform (3) geschlossen und durch Blasformen aus dem Vorformling (4) ein die Stützstruktur (2) umgebender Grundkörper (5) erzeugt wird, wobei sich der Grundkörper (5) während des Blasformens stoffschlüssig und/oder formschlüssig mit der Stützstruktur (2) verbindet.

2. Verfahren nach Anspruch 1, **dadurch gekennzeichnet, dass** die Stützstruktur (2) außenseitig Schweißrippen (6) aufweist, welche sich während des Blasformens stoffschlüssig mit dem Grundkörper (5) verbinden.

3. Verfahren nach Anspruch 1 oder 2, **dadurch gekennzeichnet, dass** die Stützstruktur (2) zumindest einen Anschlussstutzen (7) umfasst, der von der Stützstruktur (2) abragt, wobei zumindest eine Schweißrippe (6) außenseitig an dem Anschlussstutzen (7) angeordnet ist, wobei sich die Schweißrippe (6) des Anschlussstutzens (7) während des Blasformens stoffschlüssig mit dem Grundkörper (5) verbindet.

4. Verfahren nach Anspruch 3, **dadurch gekennzeichnet, dass** der Anschlussstutzen (7) eine Öffnung (8) umfasst, wobei der Grundkörper (5) durch das Blasformen einen Abdeckbereich (17) ausbildet, der die Öffnung (8) bedeckt und wobei die Öffnung (8) zugänglich gemacht wird, indem der der Öffnung (8) zugeordnete Abdeckbereich (17) entfernt wird.

5. Verfahren nach Anspruch 4, **dadurch gekennzeichnet, dass** die Blasform (3) zumindest zwei Blasformwerkzeuge (9) aufweist, wobei die Stützstruktur (2) und der Vorformling (4) vor dem Blasformen zwischen den beiden Blasformwerkzeugen (9) angeordnet werden, wobei die Blasformwerkzeuge (9) den Vorformling (4) beim Schließen der Blasform (3) an die Stützstruktur (2) andrückt.

6. Verfahren nach Anspruch 5, **dadurch gekennzeichnet, dass** die Blasformwerkzeuge (9) den Vorformling (4) derart abpressen, dass während des Blasformens ein Trennbereich (10) entsteht.

7. Verfahren nach Anspruch 6, **dadurch gekennzeichnet, dass** die Blasformwerkzeuge (9) mit Abpresskanten (11) ausgerüstet sind, welche während des Blasformens linienförmig und mit Vorspannung an dem Grundkörper (5) anliegen.

8. Verfahren nach einem der Ansprüche 5 bis 7, **dadurch gekennzeichnet, dass** der Anschlussstutzen (7) ein Verbindungselement (12) zum Anschluss an eine Anschlusskomponente umfasst, wobei vor dem Blasformen ein Schutzelement (13) derart in der Blasform (3) angeordnet wird, dass das Schutzelement (13) nach dem Blasformen zwischen dem Verbindungselement (12) und dem Grundkörper (5) angeordnet ist.

9. Verfahren nach einem der Ansprüche 1 bis 8, **dadurch gekennzeichnet, dass** die Stützstruktur (2) als Rippenstruktur ausgebildet ist.

10. Verfahren nach einem der Ansprüche 1 bis 9, **dadurch gekennzeichnet, dass** die Stützstruktur (2) eine Sensorhalterung (14) umfasst.

11. Blasformteil (1), umfassend einen Grundkörper (5), der einen Hohlraum (15) einschließt, und eine innerhalb des Grundkörpers (5) angeordnete Stützstruktur (2), wobei der Grundkörper (5) und die Stützstruktur (2) den Hohlraum (15) begrenzen, wobei der Grundkörper (5) und die Stützstruktur (2) stoffschlüssig und/oder formschlüssig miteinander verbunden sind.

12. Blasformteil (1) nach Anspruch 11, **dadurch gekennzeichnet, dass** die Stützstruktur (2) zumindest einen Anschlussstutzen (7) umfasst, der von der Stützstruktur (2) abragt und strömungsleitend mit dem Hohlraum (15) verbunden ist.

13. Blasformteil (1) nach Anspruch 12, **dadurch gekennzeichnet, dass** der Anschlussstutzen (7) ein Verbindungselement (12) zum Anschluss an eine Anschlusskomponente umfasst.
